# EUROPÄISCHE PATENTSCHRIFT

(11) **EP 2 746 730 B1**
(45) Veröffentlichungstag und Bekanntmachung des Hinweises auf die Patenterteilung: **18.11.2015**
(21) Anmeldenummer: 12199149.1
(22) Anmeldetag: 21.12.2012
(51) Int. Cl.: G01D 5/34

(54) **Antriebssystem mit einem Winkelencoder**
Drive system with an angle encoder
Système d'entraînement avec un encodeur angulaire

(43) Veröffentlichungstag der Anmeldung: 25.06.2014
(73) Patentinhaber: SICK STEGMANN GmbH, 78166 Donaueschingen (DE)
(72) Erfinder: Basler, Stefan, 78086 Brigachtal (DE); Mutschler, Reinhold, 78056 Villingen-Schwenningen (DE); Hopp, David, 78166 Donaueschingen (DE)
(74) Vertreter: Westphal, Mussgnug & Partner Patentanwälte mbB

(56) Entgegenhaltungen:
- GB-A- 2 054 995
- US-B1- 6 399 940

## Beschreibung

Winkelencoder sind aus dem Stand der Technik wohlbekannte Vorrichtungen zur Überwachung einer Winkelposition einer drehbaren Welle. Sie weisen insbesondere einen an der drehbaren Welle anordnenbaren Modulator zur Bereitstellung eines sich in Abhängigkeit von der Winkelposition der drehbaren Welle ändernden Signals und einen Empfänger zum Empfang des sich in Abhängigkeit von der Winkelposition der drehbaren Welle ändernden Signals auf. Bekannt sind insbesondere magnetische, optische, induktive und kapazitive Winkelencoder in einer Vielzahl unterschiedlicher Ausgestaltungen.

Winkelencoder werden in einer Vielzahl von unterschiedlichen Arbeitsumgebungen eingesetzt, insbesondere in solchen, in denen es zu einer thermischen Belastung des Winkelencoders kommen kann. Ein konkretes Beispiel dafür ist die Überwachung der Funktion von Motoren, insbesondere von Elektromotoren, mit einem Winkelencoder, so dass der Motor unter Verwendung von durch diese Überwachung gewonnenen Daten gesteuert werden kann. Besonders vorteilhaft ist dabei eine Überwachung, die räumlich direkt am Motor angeordnet ist. Daher erfreuen sich in der Praxis Antriebssysteme, die aus einem derartigen Motor und einem direkt im Elektromotor eingebauten Winkelencoder bestehen, großer Beliebtheit. Neben als Gesamtgerät hergestellten Systemen, die sofort vollständig montiert werden, gibt es auch Kit-Versionen, bei denen Winkelencodermodule von einem Lieferanten vorgefertigt werden und dann vom Motorenhersteller im Motor zusammengebaut werden.

In heutigen Systemen finden insbesondere zwei unterschiedliche Klassen von Encodern Anwendung: Resolver und mechatronische Systeme. Bei Resolvern handelt es sich um elektromechanische Komponenten, die basierend auf Kupferdraht und mechanischen Bauelementen einen Satz von Transformatoren bilden. Im Gegensatz dazu werden unter mechatronischen Systemen Encoder verstanden, die neben mechanischen Bauelementen auch Elektronikbausteine enthalten. Die Verwendung von Elektronikbausteinen führt dazu, dass mechatronische Systeme einen sehr viel größeren Funktionsumfang bieten und deutlich leistungsfähiger sind als Resolver.

Die Tatsache, dass sich trotz dieser klaren Überlegenheit mechatronischer Systeme auch Resolver als Motorfeedbacksysteme am Markt halten, ist auf ihre hohe Toleranz für Temperaturbelastung zurückzuführen. Beim Betrieb von Motoren, insbesondere von leistungsstarken Elektromotoren, kommt es in vielen Fällen zu einer signifikanten Erwärmung des Motors einschließlich der Motorwelle und des Motorschilds. Die Elektronikbausteine, die in heutigen mechatronischen Encodern Verwendung finden, sind in der Regel für einen Betrieb mit Motoren geeignet, bei denen die Motortemperatur 125°C nicht übersteigt. Bei höheren Betriebstemperaturen des Motors steigt ihre Ausfallwahrscheinlichkeit signifikant an.

Aus der GB 2 054 995 A ist eine optische Encoderanordnung bekannt, bei der Sender und Empfänger über Lichtleiter mit einem Modulator verbunden sind, bei der ein vereinter optischer Lichtleiter verwendet wird, um die Anzahl an Lichtleitern zu reduzieren und eine Abschwächung der Signale zu verhindern.

Aus der US 6 399 940 B1 ist ein optischer Encoder bekannt, welcher gegenüber thermischen Einflüssen, insbesondere gegenüber hitzebedingter Verformung, die zu einer ungenauen Messung führen kann, optimiert aufgebaut ist, wozu die Spiegel-Sensorelemente in einem Kühlgehäuseblock angeordnet sind und zwei aktive Kühler in einem Kühlkörper angeordnet werden.

Aus der DE 39 26 799 ist ein Winkelencoder zur Überwachung einer Winkelposition einer drehbaren Welle mit einem an der drehbaren Welle anordenbaren Modulator zur Bereitstellung eines sich in Abhängigkeit von der Winkelposition der drehbaren Welle Signals bekannt, bei dem Empfänger und Modulator thermisch isoliert voneinander angeordnet sind, so dass eine Übertragung von Wärme vom Modulator auf den Empfänger erschwert ist, wobei die thermische Isolation zumindest teilweise durch eine thermisch isolierende Schicht erzielt wird, die zwischen Modulator einerseits und Sender und Empfänger andererseits angeordnet ist.

Aus der DE 20 2004 010 921 U1 ist ein verkapselt ausgeführter Magnetfeldsensor bekannt, bei dem mit der Verkapselung ein Schutz für die Sensoreinheit realisiert wird.

Aus der JP 58041313 ist ein Antriebssystem mit einem Motor, der einen Rotor und eine Antriebswelle zum Antreiben einer Vorrichtung durch den Motor ausweist und mit einem in den Motor eingebauten oder an den Motor angebauten Winkelencoder bekannt, bei dem ein Winkelencoder mit einem an der drehbaren Welle angeordneten Modulator, einen Sender und ein Empfänger vorhanden sind und bei dem Empfänger und Modulator thermisch isoliert voneinander angeordnet sind, wobei die thermische Isolation zumindest teilweise durch eine thermisch isolierende Trennschicht erzielt wird, die zwischen dem Modulator einerseits und Sender und Empfänger andererseits angeordnet ist und für das modulierte Signal und/oder das gesendete Signal transparent ist.

Die Aufgabe der Erfindung besteht somit darin, ein Antriebssystem mit einem verbesserten Winkelencoder, der für Anwendungen geeignet ist, bei denen eine hohe thermische Belastung auftreten kann, bereitzustellen.

Diese Aufgabe wird gelöst durch ein Antriebssystem mit den Merkmalen des Anspruchs1.

Vorteilhafte Ausgestaltungen und Weiterbildungen der Erfindung sind Gegenstand der abhängigen Ansprüche.

Der erfindungsgemäße Winkelencoder zur Überwachung einer Winkelposition einer drehbaren Welle weist einen an der drehbaren Welle anordnenbaren Modulator zur Bereitstellung eines sich in Abhängigkeit von der Winkelposition der drehbaren Welle ändernden Signals und einen Empfänger zum Empfang des sich in Abhängigkeit von der Winkelposition der drehbaren Welle ändernden Signals auf. Erfindungswesentlich ist, dass der Empfänger und der Modulator thermisch isoliert voneinander angeordnet sind, so dass eine Übertragung von Wärme vom Modulator auf den Empfänger erschwert ist. Diese Maßnahme bringt den Vorteil mit sich, dass die Bauteile, insbesondere die Elektronikbauteile, die der Empfänger aufweist, eine geringere Temperaturresistenz aufweisen müssen als dies bislang der Fall war.

Zweckmäßigerweise weist der Winkelencoder in einer vorteilhaften Weiterbildung auch eine Steuerelektronik auf, mit der zumindest der Empfänger, und optional, falls ein solcher vorhanden ist, auch ein Sender ansteuerbar und/oder auslesbar ist. Dadurch, dass auch die Steuerelektronik und der Modulator thermisch isoliert voneinander angeordnet sind, so dass eine Übertragung von Wärme vom Modulator auf die Steuerelektronik erschwert ist, kann der oben genannte Vorteil auch auf die Steuerelektronik übertragen werden.

Eine vorteilhafte Weiterbildung der Erfindung sieht vor, dass der Empfänger und die Steuerelektronik als eine gemeinsame Baugruppe ausgebildet sind. Dies kann insbesondere durch Anordnung auf derselben Leiterplatte erfolgen und bringt den Vorteil mit sich, dass die Spezifikationen, welche die verwendeten Elektronikbausteine aufweisen müssen, einheitlich sind, was das Design der Schaltung erleichtert.

Bei Winkelencodern, welche auch einen Sender aufweisen, dessen Signal vom Modulator moduliert ist, wie es insbesondere bei optischen Encodern, die z.B. Lichtpolarisation zur Ermittlung der aktuellen Winkelposition aufweisen, der Fall ist, ist es besonders vorteilhaft, wenn auch der Sender und der Modulator thermisch isoliert voneinander angeordnet sind, so dass eine Übertragung von Wärme vom Modulator auf den Empfänger erschwert ist, so dass auch die Elektronikbauteile, die der Empfänger aufweist, eine geringere Temperaturresistenz aufweisen müssen als dies bislang der Fall war. In diesem Fall ist es dann zweckmäßig, wenn zumindest Empfänger, Sender und Steuerelektronik als eine gemeinsame Baugruppe ausgebildet sind, um die Anforderungen an die Elektronikbausteine auf niedrigem Niveau zu vereinheitlichen. Besonders zweckmäßig ist es, wenn die Steuerelektronik sämtliche Elektronikbausteine des Winkelencoders umfasst.

Eine konkrete, in Alleinstellung nicht erfindungsgemäße Möglichkeit, eine thermische Isolation zu erreichen, liegt in einer gezielten räumliche Beabstandung zwischen dem Modulator einerseits und dem Sender und/oder dem Empfänger und/oder der Steuerelektronik andererseits, insbesondere in einer räumlichen Beabstandung mit dem Ziel, den Abstand zwischen dem jeweiligen Bauteil und dem Modulator zu maximieren.

Eine erfindungsgemäße, alternativ oder zusätzlich realisierbare Möglichkeit, die thermische Isolation zu erzielen, besteht darin, dass ein thermischer Isolator in Form einer thermisch isolierenden Trennschicht zwischen dem Modulator einerseits und dem Sender und/oder dem Empfänger und/oder der Steuerelektronik andererseits angeordnet ist. Dabei ist wichtig, dass der thermische Isolator für das modulierte Signal und/oder ein von einem etwaig vorhandenen Sender gesendetes Signal transparent ist.

Als vorteilhaft hat es sich ferner erwiesen, wenn ein Kühlkörper vorgesehen ist, der in thermischem Kontakt zur Steuerelektronik und/oder dem Sender und/oder dem Empfänger steht.

Es ist zu unterstreichen, dass die Erfindung für alle bekannten Winkelencoder anwendbar ist, unabhängig davon, ob diese - wie z.B. ein Polarisations-Encoder- zwingend einen separaten Sender aufweisen oder -wie z.B. magnetische Encoder- einen Modulator haben, der die eigentliche Signalquelle für den Empfänger darstellen.

Das erfindungsgemäße Antriebssystem umfasst einen Motor, der - wie für Motoren üblich- einen Rotor und eine Antriebswelle zum Antreiben einer Vorrichtung durch den Motor aufweist. Insbesondere kann es sich vorteilhafterweise um einen Elektromotor handeln. Die Antriebswelle kann durch den Rotor selbst gebildet werden, sie kann aber auch - wie beispielsweise bei Getriebemotoren üblich- als separates Bauteil ausgeführt sein, auf das Rotordrehungen übertragen werden.

Das Antriebssystem weist ferner einen erfindungsgemäßen Winkelencoder, also einen Winkelencoder zur Überwachung einer Winkelposition einer drehbaren Welle mit einem an der drehbaren Welle anordnenbaren Modulator zur Bereitstellung eines sich in Abhängigkeit von der Winkelposition der drehbaren Welle ändernden Signals und mit einem Empfänger zum Empfang des sich in Abhängigkeit von der Winkelposition der drehbaren Welle ändernden Signals, bei dem der Empfänger und der Modulator thermisch isoliert voneinander angeordnet sind, so dass eine Übertragung von Wärme vom Modulator auf den Empfänger erschwert ist, auf. Diese Maßnahme bringt den Vorteil mit sich, dass die Bauteile, insbesondere die Elektronikbauteile, die der Empfänger aufweist, eine geringere Temperaturresistenz aufweisen müssen als dies bislang der Fall war.

Der Winkelencoder kann in den Motor integriert, d.h. in der Regel als Kit geliefert und beim Motorenhersteller in den Motor eingebaut, worden sein. Er kann aber auch als eigenständige Baugruppe an den Motor angebaut sein.

Dabei sind die Elektronikbausteine des als mechatronischer Encoder ausgebildeten Winkelencoders vorzugsweise an Sender und Empfänger angeordnet, was bedeuten kann, dass Sender und Empfänger von derartigen Komponenten gebildet werden, dass die Signale, die der Sender aussendet, von solchen, am Sender angeordneten Komponenten angesteuert werden und/oder dass Signale, die der Empfänger empfängt, von solchen, am Empfänger angeordneten Komponenten verarbeitet werden.

Insbesondere kann daraus folgen, dass der Modulator kein aktiver Modulator ist, bei dem ein vom Empfänger ausgesandtes Signal durch Elektronikbauteile verarbeitet wird. Es handelt sich bevorzugt um ein passives Bauteil, das das zu modulierende Signal durch physikalische Effekte, die bei der Wechselwirkung des Signals mit dem Modulator auftreten, verändert.

Ferner sind in einer besonders bevorzugten Ausbildungsform des mechatronischen Winkelencoders Sender, Modulator und Empfänger vorgesehen, die in einer reflexiven Anordnung angeordnet sind. Das bedeutet insbesondere, dass im Gegensatz zu einer Transmissionsgeometrie, bei der der Modulator zwischen Sender und Empfänger angeordnet ist, Sender und Empfänger auf derselben Seite des Modulators angeordnet sind und das vom Sender ausgesandte Signal durch den Modulator moduliert und zum Empfänger zurückgelenkt wird.

Ein konkretes Beispiel für einen derartigen als mechatronischer Encoder ausgebildeten Winkelencoder stellt beispielsweise ein optischer Encoder dar, der auf der Basis von Lichtpolarisation arbeitet. Der Modulator wird dabei durch einen sich mit dem Rotor drehenden Reflektor mit Polarisationselement gebildet, der entweder mit polarisiertem Licht beleuchtet wird, das dann hinsichtlich seiner Intensität moduliert auf den Empfänger reflektiert wird, oder der mit unpolarisiertem Licht beleuchtet wird, das dann hinsichtlich seiner Polarisationsrichtung moduliert und auf einen hinter einem Polarisationsanalysator angeordneten Empfänger reflektiert wird.

Der Modulator kann unmittelbar, d.h. direkt, oder mittelbar, d.h. über ein oder mehrere Verbindungselemente, am Rotor angeordnet sein. Empfänger und Sender sind thermisch vom Modulator isoliert. Da der Modulator selbst keine Elektronikbausteine aufweisen muss, kann er ohne Risiko einer Beschädigung höheren Temperaturen ausgesetzt werden, wenn durch den Aufbau des im mechatronischen Systems aufgenommenen als mechatronischer Encoder ausgeführten Winkelencoders sichergestellt ist, dass eine hinreichende thermische Isolation erzielt wird.

Um eine solche thermische Isolation zu erzielen, gibt es mehrere Ansatzpunkte. Einerseits kann die thermische Isolation zumindest teilweise durch einen räumlichen Abstand, insbesondere durch dessen Maximierung, erzielt werden. Das bedeutet, dass beim Aufbau des Antriebssystems und insbesondere des Winkelencoders ein möglichst großer Abstand zwischen Modulator einerseits und Sender und Empfänger nebst mit diesen Komponenten verbundenen Elektronikbausteinen andererseits angestrebt wird.

Eine konkrete Maßnahme zur Abstandmaximierung besteht darin, dass der Empfänger und der Sender an einem der Antriebswelle gegenüber liegenden Motordeckel angeordnet sind.

Andererseits kann die thermische Isolation zwischen Modulator einerseits und Sender und Empfänger nebst mit diesen Komponenten verbundenen Elektronikbausteinen andererseits dadurch verbessert werden, dass zwischen dem Modulator einerseits und Sender und Empfänger andererseits ein für das gesendete und für das modulierte Signal transparenter, nicht modulierender thermischer Isolator, wobei unter einem thermischen Isolator im Sinne dieser Patentschrift ein Stoff mit einer Wärmeleitfähigkeit schlechter als 1,5 W/ (m K) zu verstehen ist, angeordnet ist. Konkret kann beispielsweise für optische Encoder, die polarisationsbasiert nach dem oben beschriebenen Prinzip arbeiten, der Raum zwischen zwischen dem Modulator einerseits und Sender und Empfänger andererseits ganz oder teilweise mit Glas oder optischen Kunststoffen gefüllt werden.

Allgemein kann es diese Maßnahmen weiter unterstützen, wenn das Antriebssystem ein Gehäuse aufweist, welches zumindest in einem Gehäuseabschnitt, der den Modulator sowie den Sender und Empfänger des als mechatronischer Encoder ausgebildeten Winkelencoders zumindest teilweise umschließt, aus einem thermisch isolierenden Material, also einem thermischen Isolator, gefertigt ist.

Schließlich hat es sich als vorteilhaft für einen besonders effizienten Schutz der Elektronikbausteine des Winkelencoders erwiesen, wenn ein Kühlkörper vorgesehen ist, der in thermischem Kontakt zum Sender und/oder Empfänger steht.

Zum besseren Verständnis der Erfindung werden nachfolgend konkrete Ausführungsbeispiele an Hand von Figuren diskutiert. Es zeigen:
- Fig. 1a:: den Aufbau eines Winkelencoders am Beispiel eines optischen, auf Polarisation basierenden, in Reflexionsgeometrie ausgeführten Winkelencoders,
- Fig. 1b:: ein Antriebssystem gemäß einem Ausführungsbeispiel der Erfindung, in dem ein nach dem in Figur 1a dargestellten Prinzip arbeitender Winkelencoder als Kit verbaut ist,
- Fig. 1c:: den Aufbau eines erfindungsgemäßen optischen Winkelencoders nach dem Prinzip gemäß Figur 1a mit einer thermisch isolierenden Trennschicht,
- Fig. 2a:: den Aufbau eines Winkelencoders mit einer thermischen Trennschicht für einen magnetischen Winkelencoder,
- Fig. 2b:: ein Antriebssystem gemäß einem Ausführungsbeispiel der Erfindung, in dem ein nach dem in Figur 2a dargestellten Prinzip arbeitender Winkelencoder als Kit verbaut ist,
- Fig. 3a:: den Aufbau eines Winkelencoders mit einer thermischen Trennschicht für einen kapazitiven oder induktiven Drehgeber, und
- Fig. 3b:: ein Antriebssystem gemäß einem Ausführungsbeispiel der Erfindung, in dem ein nach dem in Figur 3a dargestellten Prinzip arbeitender Winkelencoder als Kit verbaut ist.

Gleiche Bestandteile der Ausführungsformen der Erfindung werden in allen Figuren mit gleichen Bezugszeichen gekennzeichnet, soweit nachfolgend nichts anderes erwähnt ist.

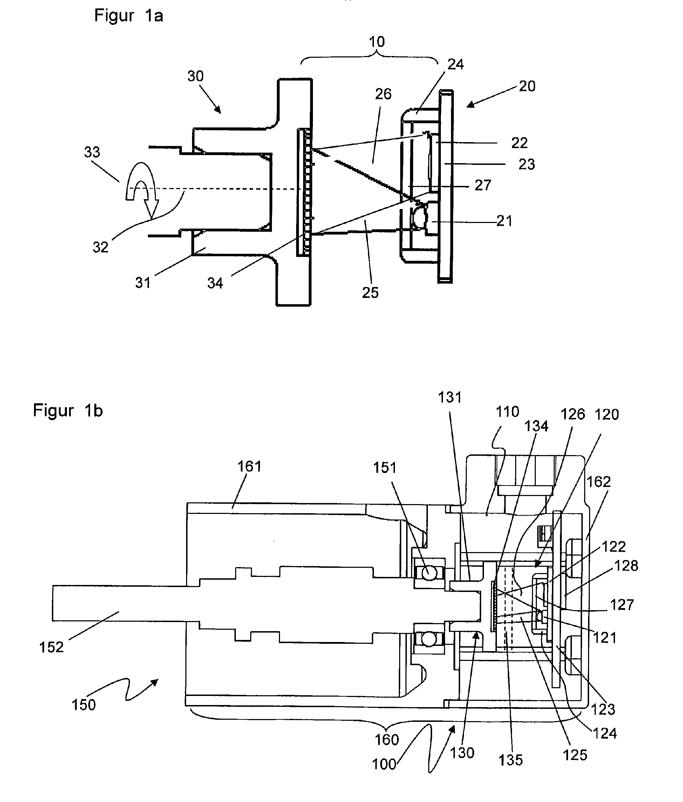

Figur 1a zeigt den Aufbau eines Winkelencoders 10 am Beispiel eines Kits (d.h. eines Bausatzes) für einen optischen, auf Polarisation basierenden Winkelencoder. Der Winkelencoder 10 weist ein Sensormodul 20 und ein Modulatormodul 30 auf. Das Sensormodul 20 umfasst einen Sender 21, der als Lichtquelle ausgeführt ist und z.B. in Form einer LED realisiert werden kann, und einen Empfänger 22, der als Lichtempfänger ausgeführt ist und z.B. in Form von Photodioden insbesondere mit Polarisationsstrukturen, die monolithisch integriert sind, realisiert sein kann. Sender 21 und Empfänger 22 sind auf einer bestückten Leiterplatte 23 gemeinsam mit optionalen weiteren Elektronikbausteinen angeordnet. Der Sender 21 und der Empfänger 22 sind ferner von einem ebenfalls auf der Leiterplatte 23 angeordneten Gehäuse 24 umschlossen, das insbesondere in Abstrahlrichtung des Lichtes 25 des als Lichtquelle ausgeführten Senders 21 und in Einfallsrichtung von Licht 26, das den Empfänger 22 beleuchtet, transparent ausgeführt ist. Sowohl Sender als auch Empfänger befinden sich hinter einem optisch transparenten Element 27. Das vom Sender 21 abgestrahlte oder das vom Empfänger 22 nachweisbare Licht weist eine vorgegebene Polarisationsrichtung auf, die im dargestellten Beispiel durch die Verwendung eines Empfängers 22 in Form von Photodioden mit Polarisationsstrukturen, die monolithisch integriert und daher in der Figur nicht erkennbar sind, erreicht wird. Selbstverständlich sind andere Formen der Polarisatoren vor dem Sender 21 oder dem Empfänger 22 denkbar.

Das Modulatormodul 30 weist einen Träger 31 auf, der von einer im Lager 51 gelagerten Welle 32 in Rotation versetzbar ist wie durch den Pfeil 33 in Figur 1a angedeutet ist. Die Welle 32 kann dabei entweder die Welle, deren Drehung überwacht werden soll, sein oder eine Welle sein, die mit der eigentlich zu überwachenden Welle gekoppelt ist.

Auf dem Träger 31 ist ein Modulator 34 angeordnet, der als Polarisator ausgeführt ist und aus dem vom Sender 21 emittierten Licht 25, das den Modulator 34 beleuchtet, die Komponente mit der der aktuellen Winkelposition des Modulators 34 entsprechenden linearen Polarisation selektiert und in Richtung auf den Empfänger 22 als den Empfänger beleuchtendes Licht 26 reflektiert. Wenn sich der Modulator 34 mit der Welle 32 dreht, dreht sich dementsprechend die durch den Modulator 34 selektierte lineare Polarisationsrichtung mit.

Auf diese Weise kann der aktuelle Drehwinkel der im Lager 51 gelagerten Welle 32 bestimmt werden, denn in Abhängigkeit von der aktuellen Position des Modulators 34 variiert die Intensität des vom Empfänger 22 nachweisbaren Lichts zwischen einem Minimum, das erreicht wird, wenn die durch die in der dargestellten Ausführungsform in den Empfänger 22 monolithisch integrierten Polarisationsstrukturen vorgegebene lineare Polarisationsrichtung senkrecht auf der durch den Modulator 34 in seiner aktuellen Winkelposition selektierten Polarisationsrichtung steht, und einem Maximum, das erreicht wird, wenn die durch die in den Empfänger 22 monolithisch integrierten Polarisationsstrukturen vorgegebene lineare Polarisationsrichtung parallel zu der durch den Modulator 34 in seiner aktuellen Winkelposition selektierten Polarisationsrichtung ist.

Fig. 1b zeigt ein Antriebssystem 100 gemäß einem Ausführungsbeispiel der Erfindung, in dem ein nach dem in Figur 1a dargestellten Prinzip arbeitender mechatronischer Encoder bzw. Winkelencoder 110 verbaut ist.

Das Antriebssystem 100 umfasst einen Motor 150, der insbesondere als Elektromotor ausgeführt sein kann, mit einem im oder am Motor 150 integrierten, als mechatronischer Encoder ausgeführten Winkelencoder 110.

Der Winkelencoder 110 weist ein Sensormodul 120 mit einem als Lichtquelle ausgeführten Sender 121, einem als Lichtempfänger ausgeführten Empfänger 122, einer bestückten Leiterplatte 123, einem insbesondere in Abstrahlrichtung des Lichtes 125 des als Lichtquelle ausgeführten Senders 121 und in Einfallsrichtung von Licht 126, das den Empfänger 122 beleuchtet, transparent ausgeführten Gehäuse 124 und einem optisch transparenten Element 127 auf. Der Empfänger 122 ist hier beispielhaft als Photodioden mit Polarisationsstrukturen, die monolithisch integriert und daher in der Figur nicht erkennbar sind, ausgeführt.

Außerdem weist der Winkelencoder 110 ein Modulatormodul 130 mit einem Träger 131 auf, auf dem ein Modulator 134 angeordnet ist, der als Polarisator ausgeführt ist.

Aufbau und Funktion des Winkelencoders 110 entsprechen im Wesentlichen Aufbau und Funktion des oben anhand der Figur 1a erläuterten Winkelencoders.

Der Motor 150 weist einen in einem Lager 151 drehbar gelagerten Rotor 152 auf, der in diesem Ausführungsbeispiel gleichzeitig die Antriebswelle bildet. Am der Antriebswelle gegenüberliegendem Ende des Rotors 152 ist der Träger 131 mit dem Modulator 134 des Modulatormoduls 130 des Winkelencoders 110 angeordnet, so dass bei einer Drehung des Rotors 152 der Modulator 134 mit gedreht wird. Der selbstverständlich in dem Motor 150 ebenfalls vorhandene Stator ist in Figur 1b der Übersicht halber nicht abgebildet.

Der Motor 150 und die Encoderanordnung sind in einem zweiteiligen Gehäuse 160 mit einem ersten Gehäuseteil 161 und einem zweiten Gehäuseteil 162 aufgenommen, wobei das erste Gehäuseteil 161 im Wesentlichen den Rotor 152 und den Stator umgibt und das zweite Gehäuseteil 162 den Bereich des als mechatronischer Encoder ausgeführten Winkelencoders 110 umgibt.

Aspekte, die wesentlich für die besonders hohe Temperaturresistenz dieses Ausführungsbeispiels eines Antriebssystems 100 sind, sind
- die Tatsache, dass im Raum zwischen Sensormodul 120 und Modulatormodul 130 ein für das gesendete und für das modulierte Signal transparenter, nicht modulierender thermischer Isolator 135 aus Glas oder optischem Kunststoff angeordnet ist. Glas bzw. optischer Kunststoff haben eine Wärmeleitfähigkeit von unter 1,5 W / (m K), sind transparent für Licht und verändern dessen Polarisation nicht. Dadurch wird erreicht, dass auch bei einer Erhitzung des Motors 150 und insbesondere des Rotors 152 zwar das Modulatormodul 130 erwärmt wird, die Wärme aber kaum an das Sensormodul 120, welches die Elektronikbausteine des Winkelencoders 110 enthält, weitergeleitet wird,
- die Realisierung einer Anordnung, in der der Abstand zwischen Sensormodul 120 und Modulatormodul 130 möglichst groß ist,
- das Vorsehen eines Kühlkörpers 128 am Sensormodul 120, und
- die Wahl eines Materials mit einer Wärmeleitfähigkeit von weniger als 1,5 W / (m K), wie z.B. von Glas oder optischem Kunststoff für das zweite Gehäuseteil 162, was ebenfalls einem Transport der am Motor 150 entstehenden Wärme in Richtung auf das Sensormodul 120 entgegenwirkt.

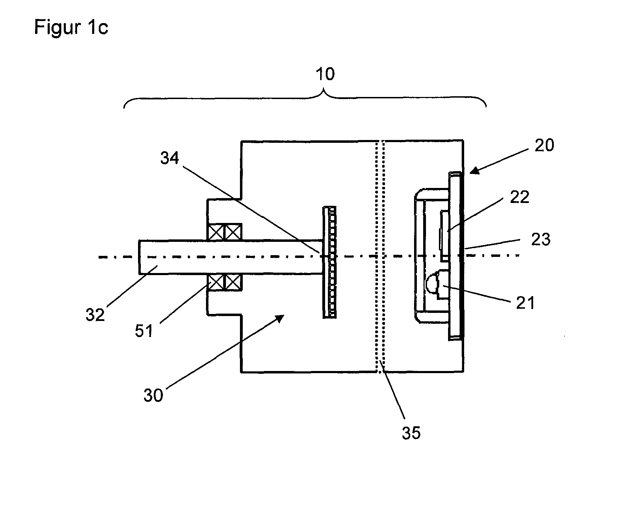

Figur 1c zeigt einen Winkelencoder als Gerät mit dem Funktionsprinzip des Kits aus Figur 1a, bei dem ferner eine thermische Trennschicht 35 vorgesehen ist.

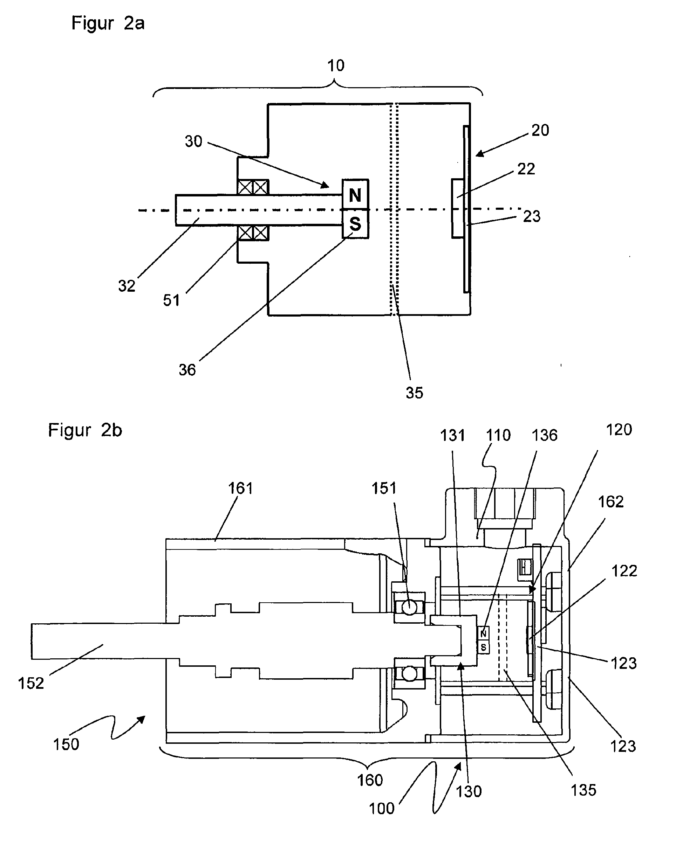

Der in Figur 2a dargestellte magnetische Winkelencoder unterscheidet sich dadurch von der Ausführungsform gemäß Figur 1c, dass als Modulator ein Magnet 36 am Modulatormodul 30 angeordnet ist und dass der Empfänger 22 ein Sensor ist, mit dem die Lage des durch den Magneten 36 erzeugten Magnetfelds im Raum nachgewiesen werden kann.

Das in Figur 2b dargestellte Antriebssystem 100 unterscheidet sich von dem in Figur 1b dargestellten lediglich dadurch, dass statt eines Winkelencoder-Kits gemäß Figur 1a ein als Bausatz bzw. Kit gelieferter Winkelencoder entsprechend dem Wirkungsprinzip des in Figur 2a dargestellten Winkelencoders Verwendung findet, so dass als Modulator ein Magnet 136 am Modulatormodul 130 angeordnet ist und der Empfänger 122 ein Sensor ist, mit dem die Lage des durch den Magneten 136 erzeugten Magnetfelds im Raum nachgewiesen werden kann.

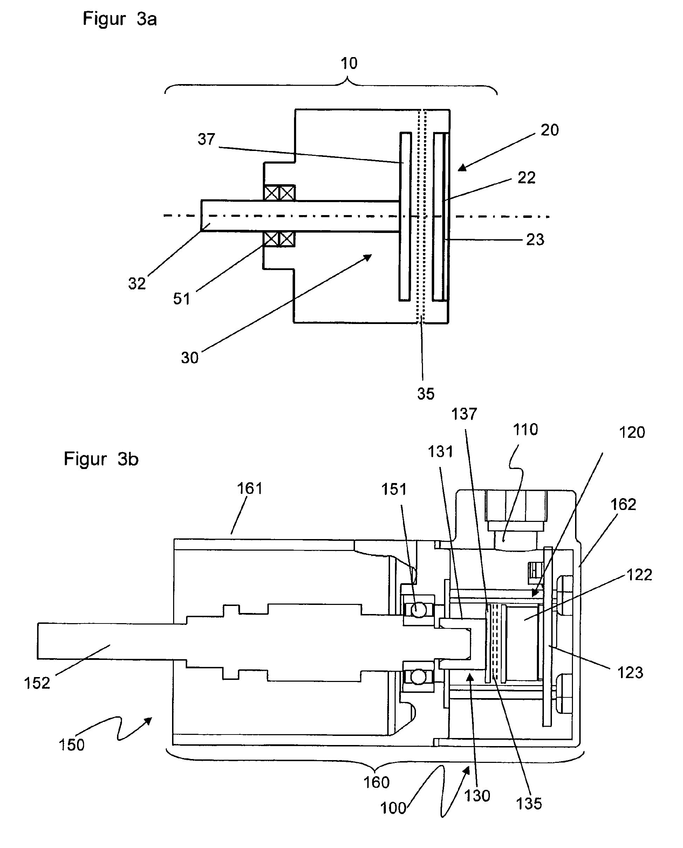

Der in Figur 3a dargestellte kapazitive Winkelencoder unterscheidet sich dadurch von der Ausführungsform gemäß Figur 1c, dass als Modulator eine Kondensatorplatte mit einer modulierenden Struktur 37 am Modulatormodul 30 angeordnet ist und dass der Empfänger 22 eine zweite, segmentierte Kondensatorplatte ist. Mit ähnlichem Aufbau kann man auch einen nach einem induktiven Prinzip arbeitenden Winkelencoder erzeugen. Dazu ist beispielsweise statt der Kondensatorplatte 37 eine Platine mit Spulen vorgesehen.

Das in Figur 3b dargestellte Antriebssystem 100 unterscheidet sich von dem in Figur 1b dargestellten lediglich dadurch, dass statt eines Winkelencoders gemäß Figur 1c ein als Bausatz oder Kit gelieferter Winkelencoder gemäß Figur 3a, welcher entweder als kapazitiver Winkelencoder oder als induktiver Winkelencoder ausgebildet ist, Verwendung findet, so dass als Modulator eine Kondensatorplatte mit einer modulierenden Struktur 137 am Modulatormodul 30 angeordnet ist und dass der Empfänger 122 eine zweite, segmentierte Kondensatorplatte ist.

### Bezugszeichenliste

- 10: Winkelencoder
- 110: mechatronischer Encoder
- 20, 120: Sensormodul
- 21, 121: Sender
- 22, 122: Empfänger
- 23, 123: bestückte Leiterplatte
- 24, 124: Gehäuse
- 25, 125: Licht
- 26, 126: Licht
- 27, 127: optisch transparentes Element
- 30, 130: Modulatormodul
- 31, 131: Träger
- 32: Welle
- 33: Pfeil
- 34, 134: Modulator
- 35, 135: thermisch isolierende Trennschicht
- 36, 136: Magnet
- 37, 137: Kondensatorplatte/Platine
- 51, 151: Lager
- 100: Antriebssystem
- 150: Motor
- 152: Rotor
- 160: Gehäuse
- 161: erstes Gehäuseteil
- 162: zweites Gehäuseteil

## Patentansprüche

1. Antriebssystem (100) mit einem Motor (150), der einen Rotor (152) und eine Antriebswelle zum Antreiben einer Vorrichtung durch den Motor (150) aufweist und mit einem in den Motor (150) eingebauten oder an den Motor angebauten Winkelencoder (10) zur Überwachung einer Winkelposition einer drehbaren Welle (32) mit einem an der drehbaren Welle anordenbaren Modulator (34) zur Bereitstellung eines sich in Abhängigkeit von der Winkelposition der drehbaren Welle (32) ändernden Signals und mit einem Empfänger (22) zum Empfang des sich in Abhängigkeit von der Winkelposition der drehbaren Welle (32) ändernden Signals, bei dem der Empfänger (22) und der Modulator (34) thermisch isoliert voneinander angeordnet sind, so dass eine Übertragung von Wärme vom Modulator (34) auf den Empfänger (22) erschwert ist, wobei die thermische Isolation zumindest teilweise durch eine thermisch isolierende Trennschicht (35) erzielt wird, die zwischen dem Modulator (34) einerseits und Sender (21) und/ Empfänger (22) andererseits angeordnet ist und für das modulierte Signal und/oder das gesendete Signal transparent ist,
**dadurch gekennzeichnet, dass** die Steuerelektronik, der Empfänger (122) und der Sender (121) an einem der Antriebswelle gegenüber liegenden Motordeckel oder einer anderen der Antriebswelle gegenüber liegenden Befestigung angeordnet sind.

2. Antriebssystem (100) nach Anspruch 1,
**dadurch gekennzeichnet, dass** der Winkelencoder (10) eine Steuerelektronik aufweist, mit der zumindest der Empfänger (22) ansteuerbar und/oder auslesbar ist und dass die Steuerelektronik und der Modulator (34) thermisch isoliert voneinander angeordnet sind, so dass eine Übertragung von Wärme vom Modulator (34) auf die Steuerelektronik erschwert ist.

3. Antriebssystem (100) nach Anspruch 1 oder 2,
**dadurch gekennzeichnet, dass** der Empfänger (22) und die Steuerelektronik als eine gemeinsame Baugruppe ausgebildet sind.

4. Antriebssystem (100) nach Anspruch 1 oder 2,
**dadurch gekennzeichnet, dass** der Winkelencoder (10) einen Sender (21) aufweist, dessen Signal vom Modulator (34) moduliert ist, und dass der Sender und der Modulator (34) thermisch isoliert voneinander angeordnet sind, so dass eine Übertragung von Wärme vom Modulator (34) auf den Sender (21) erschwert ist.

5. Antriebssystem (100) nach Anspruch 4,
**dadurch gekennzeichnet, dass** zumindest Empfänger (22), Sender (21) und Steuerelektronik als eine gemeinsame Baugruppe ausgebildet sind.

6. Antriebssystem (100) nach einem vorstehenden Anspruch,
**dadurch gekennzeichnet, dass** die Steuerelektronik sämtliche Elektronikbausteine des Winkelencoders (10) umfasst.

7. Antriebssystem (100) nach einem vorstehenden Anspruch,
**dadurch gekennzeichnet, dass** ein Kühlkörper vorgesehen ist, der in thermischem Kontakt zur Steuerelektronik und/oder dem Sender (21) und/oder dem Empfänger (22) steht.

8. Antriebssystem (100) nach einem vorstehenden Anspruch,
**dadurch gekennzeichnet, dass** das Antriebssystem (100) ein Gehäuse aufweist, welches zumindest in einem Gehäuseabschnitt, der den Modulator (134) sowie Sender (121) und Empfänger (122) des Winkelencoders (110) zumindest teilweise umschließt, aus einem thermisch isolierenden Material gefertigt ist.

## Claims

1. Drive system (100) with a motor (150), which has a rotor (152) and a drive shaft by means of which a device is driven by the motor (150), and with an angular encoder (110) mounted into or onto the motor (150) for monitoring the angular position of a rotating shaft (32), with a modulator (34) which can be positioned on the rotating shalt in order to provide a signal which changes as a function of the angular position of the rotating shaft (32), and with a receiver (22) for the reception of the signal which changes as a function of the angular position ofthe rotating shaft (32), wherein the receiver (22) and the modulator (34) are positioned in such a way as to be thermally insulated from each other, so that heat transfer fmm the modulator (34) to the receiver (22) is impeded, while thermal insulation is achieved at least in part by a thermally insulating separator (35), which is positioned between the modulator (34), on the one hand, and the transmitter (21) and/or the receiver (22), on the other hand, and which is transparent relative to the modulated signal and/or the transmitted signal, **characterized in that** the electronic control unit, the receiver (122) and the transmitter (121) are positioned on a motor cover lying opposite the drive shalt or on some other attachment lying opposite the drive shaft.

2. Drive system (100) according to claim 1, **characterized in that** the angular encoder (10) has an electronic control unit with which at least the receiver (22) can be controlled and/or read, and the electronic control unit and the modulator (34) are positioned in such away as to be thermally insulated from each other, so that heat transfer from the modulator (34) to the electronic control unit is impeded.

3. Drive system (100) according to claim 1 or 2, **characterized in that** the receiver (22) and the electronic control unit are designed as a combined structural unit.

4. Drive system (100) according to claim 1 or 2, **characterized in that** the angular encoder (10) has a transmitter (21) whose signal is modulated by the modulator (34), and the transmitter and the modulator (34) are positioned in such a way as to be thermally insulated from each other, so that the transfer ofheat from the modulator (34) to the transmitter (21) is impeded.

5. Drive system (100) according to claim 4, **characterized in that** at least the receiver (22), the transmitter (21), and the electronic control unit are designed as a combined structural unit.

6. Drive system (100) according to any preceding claim, **characterized in that** the electronic control unit contains all the electronic components of the angular encoder (10).

7. Drive system (100) according to any preceding claim, **characterized in that** there is provided a cooling clement which is in thermal contact with the electronic control unit and/or the transmitter (21) and/or the receiver (22).

8. Drive system (100) according to any preceding claim, **characterized in that** the drive system (100) has a housing which is produced of a thermally insulating material, at least in the portion of it that at least partially encloses the modulator (134), as well as the transmitter(121) and the receiver (122) ofthe angular encoder (110).

## Revendications

1. Système d'entraînement (100) avec un moteur (150) qui présente un rotor (152) et un arbre d'entraînement pour entraîner un dispositif par le moteur (150), et avec un codeur angulaire (10) monté dans le moteur (150) ou à le moteur pour surveiller la position angulaire d'un arbre rotatif (32), avec un modulateur (34) qui peut être positionné sur le vas rotatif afin de fournir un signal qui varie en fonction de la position angulaire de l'arbre rotatif (32), et avec un récepteur (22) pour la réception du signal qui varie en fonction de la position angulaire de l'arbre (32) rotatif, dans lequel le récepteur (22) et le modulateur (34) sont positionnés de telle manière pour être isolé thermiquement l'un de l'autre, de sorte que le transfert de la chaleur du modulateur (34) au récepteur (22) est empêché, tandis que l'isolation thermique est obtenue au moins en partie par un séparateur d'isolation thermique (35), qui est disposé entre le modulateur (34), d'une part, et l'émetteur (21) et/ou le récepteur (22), d'autre part, et qui est transparent par rapport au signal modulé et/ou du signal émis , **caractérisé en ce que** l'unité électronique de commande, le récepteur (122) et l'émetteur (121) sont positionnés sur un couvercle de moteur opposé à l'arbre d'entraînement ou sur un autre attachement opposé à l'arbre d'entraînement.

2. Système d'entraînement (100) selon la revendication 1, **caractérisé en ce que** le codeur angulaire (10) comporte une unité électronique de commande avec laquelle au moins le récepteur (22) peut être commandé et/ou être lu, et l'unité de commande électronique et le modulateur (34) sont positionnés de telle manière pour être isolés thermiquement l'un de l'autre, de sorte que le transfert de la chaleur du modulateur (34) à l'unité de commande électronique est empêché.

3. Système d'entraînement (100) selon la revendication 1 ou 2, **caractérisé en ce que** le récepteur (22) et l'unité de commande électronique sont conçus comme une unité de construction commune.

4. Système d'entraînement (100) selon la revendication 1 ou 2, **caractérisé en ce que** le codeur angulaire (10) comporte un émetteur (21) dont le signal est modulé par le modulateur (34), et l'émetteur et le modulateur (34) sont positionnés de telle manière pour être isolés thermiquement l'un de l'autre, de sorte que le transfert de la chaleur du modulateur (34) à l'émetteur (21) est empêché.

5. Système d'entraînement (100) selon la revendication 4, **caractérisé en ce qu'**au moins le récepteur (22), l'émetteur (21), et l'unité de commande électronique sont conçus comme une unité de construction commune.

6. Système d'entraînement (100) selon l'une quelconque des revendications précédentes, **caractérisé en ce que** l'unité de commande électronique comporte tous les composants électroniques du codeur angulaire (10).

7. Système d'entraînement (100) selon l'une quelconque des revendications précédentes, **caractérisé en ce qu'**un refroidisseur est prévu qui est en contact thermique avec l'unité électronique de commande et/ou l'émetteur (21) et/ou le récepteur (22).

8. Système d'entraînement (100) selon l'une quelconque des revendications précédentes, **caractérisé en ce que** le système d'entraînement (100) comporte un boîtier qui est réalisé d'un matériau thermiquement isolant, au moins dans une partie du boîtier qui entoure au moins partiellement le modulateur (134 ), ainsi que l'émetteur (121) et le récepteur (122) de la codeur angulaire (110).
